# EUROPÄISCHE PATENTSCHRIFT

(11) **EP 1 216 782 B1**
(45) Veröffentlichungstag und Bekanntmachung des Hinweises auf die Patenterteilung: **04.04.2007**
(21) Anmeldenummer: 01126644.2
(22) Anmeldetag: 08.11.2001
(51) Int. Cl.: B23K 20/12

(54) **Verfahren zum Fügen von zwei Werkstücken aus einem durch Erwärmen plastifizierbaren Werkstoff, insbesondere Metall, insbesondere in Form von Blechen, im Stumpfstoss**
Method for end-to-end joining of two workpieces made of a thermally plasticizable material, in particular metal, and in particular for sheet-like material
Procédé pour joindre des pièces en matériau qui se plastifie à haute température, en particulier du métal, et en particulier des tôles

(30) Priorität: 20.12.2000 DE 10063920
(43) Veröffentlichungstag der Anmeldung: 26.06.2002
(73) Patentinhaber: ThyssenKrupp Steel AG, 47166 Duisburg (DE)
(72) Erfinder: Wonneberger, Ingo, 40699 Erkrath (DE); Von Löhneysen, Henning, 34119 Kassel (DE); Wischmann, Stefan, 10437 Berlin (DE)
(74) Vertreter: Cohausz & Florack

(56) Entgegenhaltungen:
- EP-A- 0 615 480
- EP-A- 0 752 926
- EP-A- 0 810 054
- PATENT ABSTRACTS OF JAPAN vol. 1998, no. 14, 31. Dezember 1998 (1998-12-31) -& JP 10 249553 A (SHOWA ALUM CORP), 22. September 1998 (1998-09-22)

## Beschreibung

Die Erfindung betrifft ein Verfahren zum Fügen von zwei Werkstücken aus einem durch Erwärmen plastifizierbaren Werkstoff, insbesondere Metall, insbesondere in Form von Blechen, im Stumpfstoß, die mit ihren Außenseiten auf ihrer einen Seite in einer Ebene liegen und auf ihrer anderen Seite gegeneinander versetzt sind, durch Rührreibschweißen mit einem Werkzeug, das auf einer stirnseitigen Reibfläche eines Rotors einen axialen Reibstift trägt, der durch den Stumpfstoß geführt wird, nach den Merkmalen des Oberbegriffs des Anspruchs 1. Ein derartiges Verfahren ist aus JP10249553 bekannt.

Verfahren zum Fügen von Blechen im Stumpfstoß sind bekannt (EP 0 615 480 B1; EP 0 752 926 B1; EP 0 810 054 B1). Bei allen diesen Verfahren, bei denen die am Stumpfstoß angrenzenden Werkstücke dieselbe Dicke haben, ist es üblich, daß das rotierende Werkzeug an den oberen, stufenlos ineinander übergehenden Außenseiten ansetzt und die Werkstücke an ihren ebenfalls stufenlos ineinander übergehenden Unterseiten auf einer Unterlage abgestützt sind. Im Zusammenhang mit diesen Fügeverfahren ist es auch bekannt, daß das Werkzeug mit seiner stirnseitigen Reibfläche des Rotors vollflächig an den Werkstücken anliegt und die die Werkstücke abstützende Unterlage im Bereich des Stumpfstoßes eine nutenförmige Profilierung trägt, in die plastifiziertes (teigiges) Metall zur Bildung einer erhabenen Schweißhaube eingedrückt werden kann (EP 0 810 054 B1, Anspruch 4). Auch ist es bekannt, durch vollflächiges Andrücken der stirnseitigen Reibfläche des Rotors dafür zu sorgen, daß das teigige Metall nicht auf der oberen Außenseite zwischen der Reibfläche und den Werkstücken austritt sondern im Stumpfstoß verbleibt beziehungsweise nach unten weggedrückt wird (EP 0 752 926 B1, Anspruch 1).

Sofern es bei bekannten Verfahren um das Fügen von verschieden dicken Blechen im Stumpfstoß durch Rührreibschweißen geht, liegt der Dickensprung auf der Oberseite der Werkstücke und das Werkzeug wird von oben mit oder ohne Neigung zu den Werkstücken angesetzt (JP 10-249553 A). Beim Fügen erweicht die obere freie Kante des dickeren Bleches und kann von der Reibfläche des Werkzeuges auf die Höhe des dünneren Bleches beziehungsweise eines Übergangsbereichs flachgedrückt werden. Dabei bildet sich aber neben dem Werkzeug eine nicht erwünschte Wulst. Auch ist von Nachteil, daß nur kleine Dickensprünge ausgeglichen werden können. Bei größeren Dickensprüngen ergibt sich am Dickenübergang eine hinsichtlich der Weiterverarbeitung des gefügten Bauteils, zum Beispiel durch Tiefziehen, kritische Kerbwirkung, die zu Bauteilversagen führen kann.

Der Erfindung liegt die Aufgabe zugrunde, ein Verfahren zum Fügen von zwei Werkstücken aus Metall, insbesondere Blechen, im Stumpfstoß durch Rührreibschweißen zu entwickeln, bei dem die Werkstücke auch bei großen Dickenunterschieden im Stumpfstoß über ihre volle Höhe miteinander verschweißt werden und bei dem man hinsichtlich der Kerbwirkung einen unkritischen Dickensprungübergang erhält.

Diese Aufgabe wird erfindungsgemäß bei einem Verfahren der eingangs genannten Art dadurch gelöst, daß das Werkzeug auf der einen Seite mit den in einer Ebene liegenden Außenseiten der Werkstücke angesetzt wird, wobei die Reibfläche des Rotors vollflächig anliegt und daß auf der anderen Seite der Werkstücke das dünnere Werkstück auf einem Sockel abgestützt wird, der seitlich am dickeren Werkstück anliegt und am Übergang vom dünneren zum dickeren Werkstück eine abgerundete Kante aufweist, die aus dem Stumpfstoß herausgedrücktem, plastifiziertem Metall als Form für eine Hohlkehle dient.

Bei dem erfindungsgemäßen Verfahren erfolgt eine Verschweißung der beiden Werkstücke über die gesamte Höhe des Stumpfstoßes. Da die Reibfläche des Rotors vollflächig anliegt, kann kein plastifiziertes Material am Rotor austreten, vielmehr wird es in Richtung des Dickensprungs verdrängt und füllt den hier freigelassenen Formhohlraum zur Bildung einer Hohlkehle aus. Im Ergebnis erhält man also ein aus zwei Werkstücken unterschiedlicher Dicke im Stumpfstoß über die gesamte Höhe des Stumpfstoßes verschweißtes Bauteil mit zumindest kerbarmen Dickensprungübergang.

Nach einer Ausgestaltung der Erfindung ist die Dicke des Sockels gleich dem Versatz (Dickensprung) der Werkstücke, wobei der Sockel und das dickere Werkstück an ihren so stufenlos ineinander übergehenden Außenseiten auf einer gemeinsamen Unterlage aufliegen. Der Sockel kann in die Unterlage integriert sein. Die Unterlage kann eben oder als Rolle ausgebildet sein, wobei sie vorzugsweise aus zwei axial nebeneinander angeordneten, zylindrischen Körpern besteht.

Nach einer weiteren Ausgestaltung der Erfindung erstreckt sich der Reibstift über eine Länge, die ein Aufschmelzen der Werkstücke über die gesamte Höhe des Stumpfstoßes gewährleistet. Dies ist insbesondere dann gewährleistet, wenn der Reibstift eine Länge hat, die zwischen den Dicken der Werkstücke liegt.

Besonders vorteilhaft ist es für die Ausbildung der Hohlkehle, wenn der Reibstift ein schraubenförmiges Profil hat. Dieses schraubenförmige Profil sorgt nämlich in Verbindung mit der entsprechend angepaßten Rotation dafür, daß das plastifizierte Metall in Richtung der Hohlkehle gefördert wird.

Im folgenden wird die Erfindung anhand einer Zeichnung näher erläutert, die in schematischer Darstellung zwei zu fügende Bleche während des Fügens durch Rührreibschweißen in schematischer Darstellung im Querschnitt quer zum Stumpfstoß zeigt.

Zwei zu fügende Bleche 1,2 unterschiedlicher Dicke liegen mit ihren oberen Außenseiten 1a,2a in einer Ebene, während ihre unteren Außenseiten 1b,2b in der Höhe gegeneinander versetzt sind. Das dünnere Blech 1 ist unterseitig an einem Sockel 3 abgestützt, dessen Dicke gleich der Differenz der Dicken der beiden Bleche 1,2 ist. Aufgrund dieser Dimensionierung liegt die Unterseite 3a des Sockels 3 in einer Ebene mit der unteren Außenseite 2b des dickeren Bleches. Die Bleche 1,2 mit dem abstützenden Sockel 3 sind auf einer gemeinsamen Unterlage 6 positioniert.

Für das Rührreibschweißen wird von oben ein rotierendes Werkzeug 4 angesetzt, das aus einem Rotor 4a mit einer stirnseitigen Reibfläche 4a* und einem stirnseitig angesetzten axialen Reibstift 4b besteht. Der Rotor 4 liegt mit seiner stirnseitigen Reibfläche 4a* vollflächig an den oberen Außenseiten 1a,2a der Bleche 1,2 an. Sein Reibstift 4b erstreckt sich über die gesamte Höhe des Stumpfstoßes. Er kann allerdings sogar bis in einen Formhohlraum 5 ragen, der vom Dickensprungübergang der beiden Bleche 1,2 und einer abgerundeten Kante 3b des Sockels 3 gebildet wird. Da der Sockel 3 sowohl an der unteren Außenseite 1b des Bleches 1 als auch seitlich am dickeren Blech 2 fest anliegt, bildet die abgerundete Kante 3b zusammen mit dem Dickensprungübergang für das aus dem Stumpfstoß austretende, plastifizierte Metall den Formhohlraum 5 für eine Hohlkehle, die einen mindestens kerbarmen Dickensprungübergang darstellt.

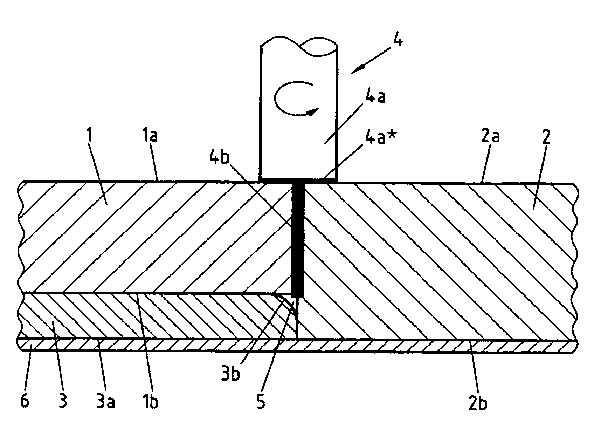

## Patentansprüche

1. Verfahren zum Fügen von zwei Werkstücken (1,2) aus einem durch Erwärmen plastifizierbaren Werkstoff, insbesondere Metall, insbesondere in Form von Blechen, im Stumpfstoß, die mit ihren Außenseiten (1a, 1b, 2a, 2b) auf ihrer einen Seite in einer Ebene liegen und auf ihrer anderen Seite gegeneinander versetzt sind, durch Rührreibschweißen mit einem Werkzeug (4), das auf einer stirnseitigen Reibfläche (4a*) eines Rotors (4a) einen axialen Reibstift (4b) trägt, der durch den Stumpfstoß geführt wird,
**dadurch gekennzeichnet, daß** das Werkzeug (4) auf der einen Seite mit den in einer Ebene liegenden Außenseiten (1a,2a) der Werkstücke (1,2) angesetzt wird, wobei die Reibfläche (4a*) vollflächig anliegt, und daß auf der anderen Seite der Werkstücke (1,2) das dünnere Werkstück (1) auf einem Sockel (3) abgestützt wird, der seitlich am dickeren Werkstück (2) anliegt und am Übergang vom dünneren zum dickeren Werkstück (1,2) eine abgerundete Kante (3b) aufweist, die aus dem Stumpfstoß gefördertem, plastifiziertem Metall als Form für eine Hohlkehle dient.

2. Verfahren nach Anspruch 1,
**dadurch gekennzeichnet, daß** die Dicke des Sockels (3) gleich dem Versatz (Dickensprung) der Werkstücke (1,2) ist und der Sockel (3) und das dickere Werkstück (2) an ihren so stufenlos ineinander übergehenden Außenseiten (3a,2b) auf einer gemeinsamen Unterlage (6) aufliegen.

3. Verfahren nach Anspruch 2,
**dadurch gekennzeichnet, daß** die Unterlage (6) eben ist.

4. Verfahren nach Anspruch 2,
**dadurch gekennzeichnet, daß** der Sockel (3) in die Unterlage (6) integriert ist.

5. Verfahren nach Anspruch 4,
**dadurch gekennzeichnet, daß** die Unterlage als Rolle ausgebildet ist.

6. Verfahren nach Anspruch 5,
**dadurch gekennzeichnet, daß** die Rolle aus zwei axial nebeneinander angeordneten Teilen besteht.

7. Verfahren nach einem der Ansprüche 1 bis 6,
**dadurch gekennzeichnet, daß** der Reibstift (3b) eine Länge hat, die zwischen den Dicken der Werkstücke (1,2) liegt.

8. Verfahren nach einem der Ansprüche 1 bis 7,
**dadurch gekennzeichnet, daß** der Reibstift (3b) ein schraubenförmiges Profil hat.

## Claims

1. Method for the joining of two workpieces (1, 2) of a material which can be plasticized by heating, in particular metal, in particular in the form of sheets, by butt joints, which lie with their outer sides (1a, 1b, 2a, 2b) on one side in one plane and on the other side are offset against one another, by twist welding with a tool (4), which carries on a face-side friction surface (4a*) of a rotor (4a) an axial friction pin (4b), which is guided through the butt joint, **characterised in that** the tool (4) is set on one side against the outer sides (1a, 2a) of the workpieces (1, 2) lying in a plane, wherein the friction surface (4a*) is in contact over its entire surface, and **in that**, on the other side of the workpieces (1, 2), the thinner workpiece (1) is supported on a mounting (3) which is in lateral contact with the thicker workpiece (2), and at the transition from the thinner to the thicker workpiece (1,2) has a rounded edge (3b), which serves as a mould for a hollow fillet for the plasticized metal delivered from the butt joint.

2. Method according to Claim 1, **characterised in that** the thickness of the mounting (3) is equal to the offset (thickness protrusion) of the workpieces (1, 2), and the mounting (3) and the thicker workpiece (2) are in contact at their outer sides (3a, 2b), which in this way merge steplessly into one another, on a common substrate (6).

3. Method according to Claim 2, **characterised in that** the substrate (6) is flat.

4. Method according to Claim 2, **characterised in that** the mounting (3) is integrated into the substrate (6).

5. Method according to Claim 4, **characterised in that** the substrate is designed as a roll.

6. Method according to Claim 5, **characterised in that** the roll consists of two parts arranged axially next to one another.

7. Method according to any one of Claims 1 to 6, **characterised in that** the friction pin (3b) has a length which lies between the thicknesses of the workpieces (1, 2) .

8. Method according to any one of Claims 1 to 7, **characterised in that** the friction pin (3b) has a screw-shaped profile.

## Revendications

1. Procédé pour unir deux pièces de travail (1, 2) d'un matériau qui peut être plastifié par action de la chaleur, en particulier un métal, en particulier sous forme de plaques, avec joint en bout, qui sont situées avec leurs faces extérieures (1a, 1b, 2a, 2b) sur un plan sur une de leurs faces et sont déplacées entre elles sur leur autre face, moyennant une soudure par agitation-friction avec un outil (4), qui, sur une surface de friction (4a*) frontale d'un rotor (4a), comporte une cheville de friction (4b) axiale, que l'on fait passer par le joint en bout, **caractérisé en ce que** l'outil (4) est appliqué par l'une de ses faces sur les faces extérieures (1a, 2a) des pièces de travail (1, 2) situées sur un plan, la surface de friction (4a*) étant en contact avec toute la surface, et **en ce que** sur l'autre face des pièces de travail (1, 2), la pièce de travail (1) plus fine est appuyée sur un socle (3) qui est latéralement en contact avec la pièce de travail (2) plus épaisse et présente dans la transition entre les pièces de travail plus fine et plus épaisse (1, 2) un chant arrondi (3b) qui sert de moule pour un moulure concave de métal plastifié extrait du joint en bout.

2. Procédé selon la revendication 1, **caractérisé en ce que** la grosseur du socle (3) est égale au déplacement (saut de grosseur) des pièces de travail (1, 2) et **en ce que** le socle (3) et la pièce de travail (2) plus épaisse reposent sur une base (6) commune par leurs faces extérieures (3a, 2b) qui pénètrent l'une dans l'autre graduellement.

3. Procédé selon la revendication 2, **caractérisé en ce que** la base (6) est plane.

4. Procédé selon la revendication 2, **caractérisé en ce que** le socle (3) est intégré dans la base (6).

5. Procédé selon la revendication 4, **caractérisé en ce que** la base est configurée comme un rouleau.

6. Procédé selon la revendication 5, **caractérisé en ce que** le rouleau se compose de deux pièces disposées axialement l'une à côté de l'autre.

7. Procédé selon l'un des revendications 1 à 6 **caractérisé en ce que** la cheville de friction (3b) a une longueur d'une mesure comprise entre les grosseurs des pièces de travail (1, 2).

8. Procédé selon l'une des revendications 1 à 7 **caractérisé en ce que** la cheville de friction (3b) a un profil hélicoïdal.
